# EUROPEAN PATENT APPLICATION

(11) **EP 4 611 072 A1**
(43) Date of publication of application: **03.09.2025**
(21) Application number: 25156832.5
(22) Date of filing: 10.02.2025
(51) Int. Cl.: H01M 4/587, H01G 11/26, H01G 11/64, H01M 50/46, H01M 10/0525, H01M 10/0567

(54) **ELECTRICITY STORAGE DEVICE**

(30) Priority: 27.02.2024 JP 2024027026
(71) Applicant: Prime Planet Energy & Solutions, Inc., Chuo-ku, Tokyo 103-0022 (JP)
(72) Inventor: IWATA, Ryosuke, Tokyo, 103-0022 (JP); MATSUTA, Shigeki, Tokyo, 103-0022 (JP)
(74) Representative: Kuhnen & Wacker Patent- und Rechtsanwaltsbüro PartG mbB

(57) **Abstract**

To provide an electricity storage device with reduced unevenness in film formation and improved battery performance and safety. In the electricity storage device, an electrolyte solution contains a boron-containing film-forming agent. A negative electrode active material layer 40 adheres to a separator 50. The negative electrode active material layer 40 contains graphite particles 43, and the graphite particles 43 have a degree of orientation of 180 or less.

## Description

### BACKGROUND

### Technical Field

The present disclosure relates to an electricity storage device.

Electricity storage devices, such as lithium-ion secondary batteries, nickel-metal hydride batteries, other secondary batteries, and capacitors, are lightweight and exhibit high energy density. For this reason, these electricity storage devices are suitably used as power sources for portable devices such as personal computers and portable terminals, and as high-output power sources for vehicles such as power sources for driving electric vehicles (BEVs). In such electricity storage devices, combinations of active materials and electrolyte solutions have been investigated to improve battery performance.

For example, Japanese Patent Application No. 2011-34893 discloses a nonaqueous electrolyte secondary battery in which a lithium salt containing an oxalate complex as an anion and acetonitrile are added to a nonaqueous electrolyte. The content of the acetonitrile is 0.6 mass% to 1.0 mass% based on the content of the lithium salt having the oxalate complex as the anion. This suitably forms a film on a surface of a negative electrode and can improve a cycle characteristic and a storage characteristic of the nonaqueous electrolyte secondary battery.

For example, Japanese Patent Application No. 2013-97973 discloses a nonaqueous electrolyte secondary battery, in which lithium bis(oxalate)borate (LiBOB) is added to a nonaqueous electrolyte. A coating (film) derived from LiBOB is formed on the surface of the negative electrode of the nonaqueous electrolyte secondary battery. LiBOB is added such that a peak intensity α, which originates from a three-coordination structure where the coordination number of boron in the film is 3, and a peak intensity β, which originates from a four-coordination structure where the coordination number of boron is 4, satisfy a specific condition (α / (α + β) ≥ 0.4). Thus, the battery characteristics can be improved.

### SUMMARY

However, metal ions (e.g., sodium ions, potassium ions, etc.) are inevitably mixed into the electricity storage device (especially, in an active material layer) as impurities derived from various additives and the like. The mixed metal ions react with a film-forming agent in an electrolyte solution to produce, for example, insoluble salts. In Japanese Patent Application No. 2011-34893 and Japanese Patent Application No. 2013-97973, the film-forming agent is trapped by the metal ions mixed in a negative electrode active material when the electrolyte solution is poured into the electricity storage device. Before the electrolyte solution spreads over the entire active material layer, the film-forming agent is trapped, resulting in an uneven film.

The present disclosure has been made in view of the above circumstances, and its object is to provide an electricity storage device with reduced unevenness in film formation and improved battery performance and safety.

An electricity storage device disclosed herein includes: an electrode assembly including a positive electrode having a positive electrode active material layer, a negative electrode having a negative electrode active material layer, and a separator interposed between the positive electrode and the negative electrode; and an electrolyte solution. The electrolyte solution contains a boron-containing film-forming agent. The negative electrode active material layer adheres to the separator. The negative electrode active material layer contains graphite particles, and the graphite particles have a degree of orientation of 180 or less.

Such an electricity storage device can promote the permeation of the electrolyte solution toward a thickness direction of the negative electrode active material layer via the separator while restricting a path in which the electrolyte solution permeates directly through the negative electrode active material layer during pouring. Thus, unevenness in the film formed on a surface of the negative electrode active material layer is reduced. Such an effect can lead to an improvement in cycle capacity maintenance rate of the electricity storage device and a reduction in the amount of heat generated.

In the electricity storage device of one aspect disclosed herein, a peel strength between the negative electrode active material layer and the separator is 0.5 N/m or more. This allows the electrolyte solution to more easily permeate from the separator toward the thickness direction of the negative electrode active material layer. Such an effect can lead to a further reduction in the amount of heat generated in the electricity storage device.

In the electricity storage device of another aspect disclosed herein, an adhesive layer is provided between the negative electrode active material layer and the separator. This allows the electrolyte solution to more easily permeate from the separator toward the thickness direction of the negative electrode active material layer. Such an effect can help ensure a reduction in the amount of heat generated in the electricity storage device.

In the electricity storage device of another aspect disclosed herein, an average aspect ratio of the graphite particles is 1.2 or more. This can help ensure a reduction in the degree of orientation of graphite particles. Such an effect can lead to a further improvement in cycle capacity maintenance rate of the electricity storage device.

In the electricity storage device of another aspect disclosed herein, the boron-containing film-forming agent is a lithium salt of an oxalate complex. This allows a preferred film to be formed on the surface of the negative electrode active material layer.

In the electricity storage device of another aspect disclosed herein, the boron-containing film-forming agent is lithium bis(oxalate)borate. Thus, the cycle capacity maintenance rate of the electricity storage device can be further improved. In addition, the amount of heat generated in the electricity storage device can be reduced more.

### BRIEF DESCRIPTION OF THE DRAWINGS

FIG. 1 is a cross-sectional view schematically showing an internal structure of a nonaqueous electrolyte secondary battery according to one embodiment disclosed herein.
FIG. 2 is an exploded view schematically showing a configuration of a wound electrode assembly of the nonaqueous electrolyte secondary battery according to the embodiment disclosed herein.
FIG. 3 is a schematic cross-sectional view of a negative electrode for explaining a permeation path for an electrolyte solution when the negative electrode is not subjected an orientation process, and a separator does not adheres to a surface of a negative electrode active material layer.
FIG. 4 is a schematic cross-sectional view of the negative electrode for explaining a path in which the electrolyte solution permeates toward a thickness direction of the negative electrode active material layer via the separator.

### DETAILED DESCRIPTION

### <Definition of Terms>

Hereinafter, a lithium-ion secondary battery, which is one of typical embodiments of an electricity storage device in the present disclosure will be described in detail with reference to the drawings. Matters that are necessary for carrying out the present disclosure but are not specifically mentioned herein (e.g., a general configuration and manufacturing process of an electricity storage device that do not characterize the present disclosure) may be understood by those skilled in the art as design matters based on techniques known in the related art. The present disclosure can be carried out on the basis of the description given herein and common technical knowledge in the related art. In the following drawings, members and components that have the same actions are described with the same symbols. The dimensional relationships (length, width, thickness, etc.) in each drawing do not reflect the actual dimensional relationships.

The term "electricity storage device" as used herein encompasses a concept of a device in which a charging and discharging reaction occurs due to transfer of charge carriers between a pair of electrodes (a positive electrode and a negative electrode). That is, the electricity storage devices encompass secondary batteries (e.g., lithium-ion secondary batteries, nickel-metal hydride batteries, and nickel-cadmium batteries); and capacitors (physical batteries) such as lithium-ion capacitors and electric double layer capacitors. The term "lithium-ion secondary battery" as used herein refers to an electricity storage device that uses lithium ions as charge carriers to repeatedly carry out charging and discharging through the transfer of charges along with the lithium ions between the positive electrode and the negative electrode.

When the phrase "A to B (where A and B are arbitrary numerical values)" is described herein as a numerical range, it means "A or more and B or less" and also encompasses the meanings of "more than A and less than B", "more than A and B or less", and "A or more and less than B".

### <Lithium-Ion Secondary Battery>

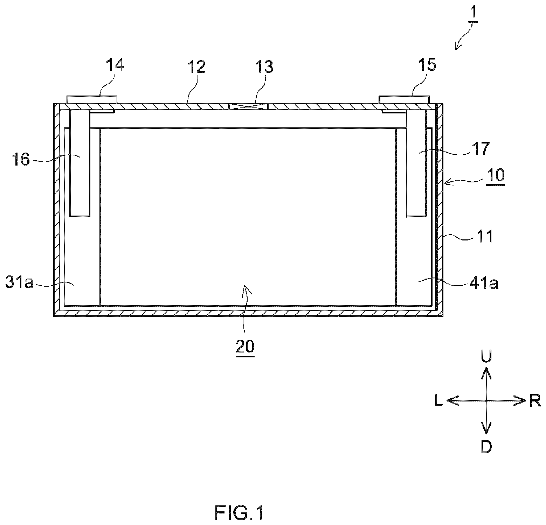

FIG. 1 is a schematic longitudinal-sectional view of a lithium-ion secondary battery 1 according to one embodiment. In the description below, the signs L, R, U, and D in the drawings represent left, right, up and down of the lithium-ion secondary battery 1, respectively. However, these are only directions for convenience of explanation and do not limit an installation form of the lithium-ion secondary battery 1.

### <Battery Case>

As shown in FIG. 1, in the lithium-ion secondary battery 1 according to the present embodiment, a battery case 10 has a rectangular shape and is flat and square. However, the shape of the battery case 10 is not limited to this, and may be cylindrical, for example. The battery case 10 has a battery body 11 that houses an electrode assembly 20 and an electrolyte solution (not shown), and a sealing plate (lid) 12 that seals an opening of the body. The battery body 11 and the sealing plate 12 are welded and sealed by laser welding or the like. Material for the battery case 10 can be the same as that used in conventional electricity storage devices of this type, with no particular restrictions. As an example, the material for the battery case 10 is a lightweight and thermally conductive metal material such as aluminum. However, the configuration of the battery case 10 can also be modified. For example, a laminated film which is flexible may be used as the material for the battery case.

In the present embodiment, the battery body 11 is composed of a bottom wall, a pair of short side walls opposed to each other, and a pair of a long side wall opposed to each other, all side walls extending from the bottom wall. In the present embodiment, the sealing plate 12 of the battery case 10 is provided with a thin-walled safety valve 13 set to release an internal pressure of the battery case 10 when the internal pressure increases to a predetermined level or higher, and an inlet (not shown) for pouring the electrolyte solution. Outside the battery case 10, a positive-electrode external terminal 14 and a negative-electrode external terminal 15 are provided for external connection. These electrode terminals are electrically connected to the electrode assembly 20 housed inside the battery case 10 via internal terminals 16 and 17.

The external terminals 14 and 15 are made of metal. The positive-electrode external terminal 14 can be made using, for example, aluminum or an aluminum alloy. The negative-electrode external terminal 15 can be made using, for example, copper or a copper alloy.

The internal terminals 16 and 17 are made of metal. The positive-electrode internal terminal 16 can be made using, for example, aluminum or an aluminum alloy, from the viewpoint of improving joining strength with a non-formed portion 31a of the positive electrode active material layer. The negative-electrode internal terminal 17 can be made using, for example, copper or a copper alloy, from the viewpoint of improving the joining strength with a non-formed portion 41a of the negative electrode active material layer.

### <Electrolyte Solution>

The electrolyte solution can be a nonaqueous electrolyte solution in which a film-forming agent is added to a suitable nonaqueous solvent. Conventional known nonaqueous electrolyte solutions can be employed without any particular restrictions. Examples of nonaqueous solvents include carbonates, ethers, esters, sulfones, lactones, and the like. Of these, carbonates are preferable from the viewpoint of improving the performance of the electricity storage device. Examples of carbonates that can be used include ethylene carbonate (EC), propylene carbonate (PC), diethyl carbonate (DEC), dimethyl carbonate (DMC), ethyl methyl carbonate (EMC), and the like. These solvents can be used alone or in combination of two or more kinds.

The electrolyte solution disclosed herein contains the film-forming agent. The film-forming agent reacts with the negative electrode when the battery is initially charged. Thus, the film-forming agent forms a film (typically a Solid Electrolyte Interphase (SEI) film) on a surface of the negative electrode active material layer (or negative electrode active material). This film has excellent permeability of charge carriers (here, lithium ions). The film inhibits the reaction between the nonaqueous solvent and the negative electrode active material. This can suppress the reduction in capacity of the electricity storage device due to decomposition of the electrolyte solution. In addition, by reducing the resistance, the input/output characteristics of the electricity storage device can be improved. Typical examples of the film-forming agents include vinylene carbonate (VC), vinylethylene carbonate (VEC), fluoroethylene carbonate (FEC), and oxalate complex compounds. Examples of oxalate complex compounds include compounds having a four-coordinated structure in which at least one oxalate ion (C₂O₄²⁻) is coordinated to boron (B) as a central atom, and compounds having a six-coordinated structural portion in which at least one oxalate ion is coordinated to phosphorus (P) as the central atom. The electrolyte solution disclosed herein contains a boron-containing film-forming agent centered on boron. The boron-containing film-forming agent causes a film containing boron to be formed on the surface of a negative electrode active material layer 42. The boron-containing film-forming agent is excellent in reducing the resistance of the electricity storage device. The boron-containing film-forming agent preferably contains a charge carrier (here, lithium ions). Examples of boron-containing film-forming agents include lithium salts having an oxalate complex as the anion, such as lithium bisoxalate borate (Li[B(C₂O₄)₂]; LiBOB), lithium difluorooxalate borate (Li[BF₂(C₂O₄)]; LBFO), and the like. From the viewpoint of reducing a resistance value and ensuring stability of the film, the boron-containing film-forming agent is preferably LiBOB. By the addition of LiBOB, a favorable film is formed on a negative electrode 40.

An addition ratio of the film-forming agent is not particularly limited as long as the effects of the technology of the present disclosure are exhibited. The content of the film-forming agent can typically be 0.05 wt% or more and 1.2 wt% or less when the total weight of the electrolyte solution is 100 wt%. From the viewpoint of suppressing the reduction in capacity, the lower limit of the content of the film-forming agent is preferably 0.10 wt% or more, more preferably 0.15 wt% or more, and even more preferably 0.20 wt% or more. In consideration of an increasing in resistance, the upper limit of the content of the film-forming agent is preferably 1.0 wt% or less, more preferably 0.9 wt% or less, and even more preferably 0.8 wt% or less.

Any gas generators, dispersants, thickeners, anti-overcharge agents, or support salts, etc. can also be added to the electrolyte solution as long as the effects of the technology according to the present disclosure are not significantly impaired. Examples of gas generators and anti-overcharge agents include biphenyl (BP), cyclohexylbenzene (CHB), and the like. As the support salt, typically, lithium salts such as LiPF₆, LiBF₄, and LiClO₄ are suitably used. The support salt is used as a main electrolyte. The content of such a support salt is not particularly limited as long as the effects of the technology according to the present disclosure are not significantly impaired.

### <Electrode Assembly>

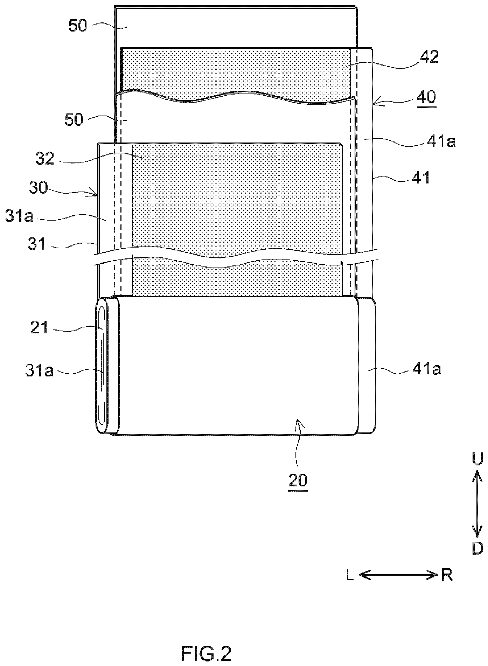

A positive electrode 30 and the negative electrode 40 of the lithium-ion secondary battery 1 according to the present embodiment have active material layers 32 and 42 with the configuration disclosed herein, respectively. FIG. 2 is an exploded view schematically illustrating a configuration of the wound electrode assembly 20. The positive electrode 30 has a positive electrode current collector foil 31 and the positive electrode active material layer 32. The negative electrode 40 has a negative electrode current collector foil 41 and the negative electrode active material layer 42. A separator 50 is interposed between the positive electrode 30 and the negative electrode 40.

In the present embodiment, the electrode assembly 20 is a wound electrode assembly that is composed of the rectangular positive electrode 30 and the rectangular negative electrode 40 that are wound with the rectangular separator 50 interposed therebetween. FIG. 2 is an exploded view schematically illustrating a cell unit constituting the wound electrode assembly 20 according to one aspect of the present embodiment. In the description below, the signs LR, T, and UD in the drawings represent the width direction, thickness direction, and height direction of the wound electrode assembly 20, respectively. However, these are only directions for convenience of explanation and do not limit an installation form of the lithium-ion secondary battery 1. The electrode assembly 20 is not limited to, but may be a stacked electrode assembly including a positive electrode and a negative electrode that are stacked on each other with a separator interposed therebetween. The number of electrode assemblies 20 is not particularly limited. The battery case 10 may house a plurality of electrode assemblies (e.g., plural cell units stacked in the thickness direction, and the like). The dimension of the electrode assembly 20 in the width direction is not particularly limited, as long as the effects of the technology according to the present disclosure are not significantly impaired. The dimension of the electrode assembly 20 in the width direction may be 130 mm or more, 150 mm or more, 200 mm or more, or 300 mm or more. Even if the dimension of the electrode assembly 20 in the width direction is large, the film-forming agent can be spread around the center of the electrode assembly 20 to reduce unevenness in the film.

### <Negative Electrode and Negative Electrode Active Material Layer>

As shown in FIG. 2, the negative electrode 40 includes the rectangular negative electrode current collector foil 41 and the negative electrode active material layer 42 formed on a surface of the negative electrode current collector foil 41. The negative electrode active material layer 42 contains a negative electrode active material that can reversibly absorb and release charge carriers (e.g., lithium ions). The negative electrode active material layer 42 may be formed on one or both sides (here, both sides) of the negative electrode current collector foil 41. As shown in FIGS. 1 and 2, the negative electrode 40 may have the non-formed portion 41a of the negative electrode active material layer where the negative electrode active material layer 42 is not formed and the negative electrode current collector foil 41 is exposed. The non-formed portion 41a of the negative electrode active material layer is provided to protrude from one end of the wound electrode assembly 20. The non-formed portion 41a of the negative electrode active material layer can be joined to the negative-electrode internal terminal 17.

The negative electrode current collector foil 41 according to the present embodiment has a rectangular shape, but its shape and dimensions are not particularly limited and may be determined according to the battery design as appropriate. The material for the negative electrode current collector foil 41 may be any known negative electrode current collector foil used for electricity storage devices, and is not particularly limited. The material for the negative electrode current collector foil 41 is, for example, copper or a copper alloy.

The negative electrode active material layer 42 disclosed herein contains at least graphite particles 43 as the negative electrode active material. The graphite particles 43 may be made of natural graphite or artificial graphite. The graphite particles 43 may be one processed by known methods or one commercially available. The graphite particles 43 may be amorphous carbon coated graphite, which is a form of graphite coated with an amorphous carbon material. The negative electrode active material layer 42 in use can be made of a combination of the graphite particles 43 and a negative electrode active material used for a negative electrode of a general lithium-ion secondary battery. Examples of the negative electrode active materials other than the graphite particles 43 include carbon materials such as soft carbon (easily graphitizable carbon), hard carbon (difficult-to-graphitize carbon), and carbon nanotubes; metal oxide materials such as silicon oxide, titanium oxide, vanadium oxide, and lithium-titanium composite oxide; metal nitride materials such as lithium nitride, lithium-cobalt composite nitrides; silicon compounds; and the like.

An average aspect ratio of the graphite particles 43 is not particularly restricted as long as the effects of the technology of the present disclosure are exhibited. However, when the graphite particles 43 are perfectly spherical (i.e., with an aspect ratio of 1.0), the effects of the technology of the present disclosure tend to be reduced because the permeation path described later is unchanged. Therefore, the graphite particles 43 are preferably graphite particles in which the degree of orientation increases by 10 or more when the negative electrode 40 is compressed until its thickness decreases by 10% (in the case of a perfect spherical shape, in other words, for an aspect ratio of 1.0, the degree of orientation does not change). For example, the lower limit of the average aspect ratio of the graphite particles 43 can be 1.1 or more. From the viewpoint of allowing the electrolyte solution to easily pass through the negative electrode active material layer 42 in the thickness direction, the lower limit of the average aspect ratio of the graphite particles 43 is preferably 1.2 or more, more preferably 1.5 or more, and even more preferably 2.0 or more. If the average aspect ratio of the graphite particles 43 is extremely large, the compression filling property of the graphite particles 43 tends to deteriorate. Therefore, the upper limit of the average aspect ratio of the graphite particles 43 is preferably 20.0 or less, more preferably 15.0 or less, and even more preferably 10.0 or less. The average aspect ratio of the graphite particles 43 can be calculated, for example, by observing a scanning electron microscope (SEM) image of a cross section of the negative electrode active material layer removed from the electricity storage device. First, a planar SEM observation image of the graphite particles is obtained, and a rectangle circumscribing the graphite particle is set. The aspect ratio is calculated from the ratio of the length of the longer side to that of the shorter side of the rectangle. The average aspect ratio is determined by randomly selecting multiple graphite particles (e.g., 300 or more particles) from the SEM observation image, calculating the aspect ratio of each particle, and then calculating an arithmetic mean value of the ratios.

The negative electrode active material layer 42 disclosed herein contains the graphite particles 43. The graphite particles 43 contained in the negative electrode active material layer 42 have the degree of orientation of 180 or less. By orienting the graphite particles 43, the path (permeation path A) in which the electrolyte solution permeates toward the width direction of the negative electrode active material layer 42 can be restricted. Also, the electrolyte solution can easily permeate into the negative electrode active material layer 42 because of the path (permeation path B), in which the electrolyte solution permeates toward the thickness direction of the negative electrode active material layer 42 through the separator 50. From the viewpoint of improving a cycle capacity maintenance rate of the electricity storage device and reducing an amount of heat generated by the negative electrode, the upper limit of the degree of orientation is preferably 170 or less, more preferably 160 or less, and even more preferably 150 or less. The "degree of orientation" as used herein refers to a ratio (I₍₀₀₂₎/I₍₁₁₀₎)of a peak area I₍₀₀₂₎ derived from (002) of the graphite particle to a peak area I₍₁₁₀₎ derived from (110) of the graphite particle. The degree of orientation is an index that represents the degree of orientation of a hexagonal mesh plane of the graphite particle relative to the thickness direction of the negative electrode (i.e., normal direction of the negative electrode current collector foil 41 or separator 50). It shows that the smaller the value of the degree of orientation, the more perpendicular to the negative electrode current collector foil (or separator 50) the hexagonal mesh plane is. It also shows that the larger the degree of orientation, the more parallel to the negative electrode current collector foil 41 (or separator 50) the hexagonal mesh plane is. The degree of orientation can be calculated based on measurement results of X-ray crystal structure analysis. Typically, the negative electrode active material layer taken out from the electricity storage device is measured by an X-ray diffraction (XRD: X-ray diffraction) method using CuKα radiation. In an XRD chart, peaks derived from (002) of the graphite particles generally appear in a range of 2θ = 25.5° to 27.5°. Peaks derived from (110) of the graphite particles generally appear in a region of 2θ = 76.5° to 78.5°. Thus, the degree of orientation can be determined from the XRD chart by determining the peak area I₍₀₀₂₎ derived from the (002) of the graphite particles and the peak area I₍₁₁₀₎ derived from the (110) of the graphite particles by using commercially available analysis software, and then calculating the ratio (I₍₀₀₂₎/I₍₁₁₀₎).

The graphite particles 43 can typically be easily oriented by applying a magnetic field to the negative electrode active material layer 42. An orientation method can be a conventionally known method as described in, for example, Japanese Patent Application No. 2015-138644. A paste-like negative electrode composite material is applied onto a negative electrode current collector foil 41 and solidified (completely dried), followed by applying the magnetic field onto the negative electrode current collector foil 41 in the normal direction thereof, thereby making it possible to reduce the degree of orientation of the graphite particles 43. The orientation of the graphite particles 43 is preferably controlled by arranging plural magnets in a row.

An average particle size of the graphite particles 43 is not particularly limited as long as the effects of the technology of the present disclosure are not significantly impaired. The average particle size of the graphite particles 43 can typically be 30 µm or less. Since a smaller average particle size increases an electrode density, from the viewpoint of increasing the capacity of the electricity storage device, the upper limit of the average particle size of the graphite particles 43 is preferably 25 µm or less, and more preferably 20 µm or less. The average particle diameter of the active material (here, the graphite particles 43) can be measured as a 50 volume% particle size (D50 particle size) based on a laser diffraction and light scattering method.

The negative electrode active material layer 42 may contain various additives such as binding agents (binders), conductivity aids, inorganic fillers, or thickeners, as long as the effects of the technology according to the present disclosure are not significantly impaired. To form the negative electrode active material layer, for example, a paste (slurry) composition is prepared by dispersing the negative electrode active material and a binder (or a conductivity aid, an inorganic filler, etc. used as necessary) in an appropriate solvent (ion-exchanged water, organic solvent, or the like). An appropriate amount of the composition is applied onto the surface of the negative electrode current collector foil 41 and dried, thereby enabling the formation of the negative electrode active material layer 42. These various additives may be used alone or in combination of two or more kinds.

Examples of binders added to the negative electrode active material layer 42 include binders used in nonaqueous pastes and binders used in water-soluble pastes. Examples of binders used in nonaqueous pastes include polyvinyl halide resins such as polyvinylidene fluoride (PVDF) and polyvinylidene chloride (PVDC), polyalkylene oxides such as polyethylene oxide (PEO), and the like. When using water-based pastes, water-soluble or water-dispersible polymer materials can be preferably employed. Examples of binders used in water-based pastes include polytetrafluoroethylene (PTFE), styrene-butadiene rubber (SBR), and the like. Of these, for example, SBR can be used as the binder for the negative electrode active material layer because a low-cost binder with minimal environmental impact is preferred. By adding the binder to the negative electrode active material layer 42, the adhesiveness (stickiness) between the negative electrode active material layer and the negative electrode current collector foil or separator can be improved. In addition, the occurrence of cracks in the negative electrode active material layer during a manufacturing process of the electricity storage device can be reduced.

When the negative electrode active material layer 42 contains a binder, the binder content is not particularly limited. The binder content in the negative electrode active material layer 42 can typically be 0.2 wt% or more and 5.0 wt% or less when the total weight of a solid of the negative electrode active material layer 42 is 100 wt%. From the viewpoint of improving peel strength between the negative electrode active material layer and the separator, the lower limit of the binder content may be 0.4 wt% or more, and is preferably 0.5 wt% or more, more preferably 0.6 wt% or more, and even more preferably 0.8 wt% or more. A large content of the binder in the negative electrode active material increases the resistance value of the electricity storage device. Thus, from the viewpoint of an improvement in cycle characteristic, the upper limit of the binder content is preferably 5.0 wt% or less, more preferably 4.0 wt% or less, and even more preferably 3.0 wt% or less.

Examples of conductivity aids contained in the negative electrode active material layer 42 include acetylene black, needle graphite, CNT, and metal powders. Examples of inorganic fillers include aluminum hydroxide, silica, alumina, zirconia, titania, boehmite, magnesia, and the like. Examples of thickeners include carboxymethylcellulose (CMC), methylcellulose (MC), and the like.

The thickness (film thickness) of the negative electrode active material layer 42 is not particularly limited as long as the effects of the technology of the present disclosure are not significantly impaired. The lower limit of the thickness of the negative electrode active material layer 42 is preferably 30 µm or more, more preferably 50 µm or more, and even more preferably 60 µm or more, from the viewpoint of improving the capacity density of the electricity storage device. The upper limit value of the film thickness may be 150 µm or less, 125 µm or less, or 100 µm or less. The film thickness of the negative electrode active material layer 42 is an average thickness of the negative electrode active material layer 42 applied per side of the negative electrode current collector foil 41.

A true density of the negative electrode active material layer 42 is not particularly limited as long as the effects of the technology of the present disclosure are not significantly impaired. The true density of the negative electrode active material layer 42 can be adjusted depending on conditions for a pressing process for the negative electrode active material layer 42 when forming the negative electrode 40. The larger the true density of the negative electrode active material layer, the higher the capacity of the electricity storage device tends to become. Thus, the lower limit of the true density of the negative electrode active material layer 42 is preferably 0.8 g/cm³ or more, more preferably 1.0 g/cm³ or more, and even more preferably 1.3 g/cm³ or more. The upper limit of the true density of the negative electrode active material layer 42 may be 1.7 g/cm³ or less, 1.6 g/cm³ or less, and 1.5 g/cm³ or less.

### <Positive Electrode and Positive Electrode Active Material Layer>

As shown in FIG. 2, the positive electrode 30 includes the rectangular positive electrode current collector foil 31 and the positive electrode active material layer 32 formed on a surface of the positive electrode current collector foil 31. The positive electrode active material layer 32 contains a positive electrode active material that can reversibly absorb and release charge carriers (e.g., lithium ions). The positive electrode active material layer 32 only needs to be formed on one or both sides (here, both sides) of the positive electrode current collector foil 31. As shown in FIGS. 1 and 2, the positive electrode 30 may have the non-formed portion 31a of the positive electrode active material layer where the positive electrode active material layer 32 is not formed and the positive electrode current collector foil 31 is exposed. The non-formed portion 31a of the positive electrode active material layer is provided to protrude from one end of the wound electrode assembly 20. The positive-electrode internal terminal 16 can be joined to the non-formed portion 31a of the positive electrode active material layer.

For example, the material for the positive electrode current collector foil 31 is aluminum or an aluminum alloy. As the positive electrode active material for the positive electrode active material layer 32, the positive electrode active material used for the positive electrode of a general lithium-ion secondary battery can be used. Specifically, the positive electrode active material is a lithium composite metal oxide having a layered rock salt structure, a spinel structure, or an olivine structure. Lithium composite metal oxides include LiCoO₂, LiNiO₂, LiFeO₂, LiNiₓCo_{y}Mn_{1-x-y}O₂ (NCM), LiNi_{0.5}Mn_{1.5}O₄, LiNi_{0.8}Co_{0.15}Al_{0.05}O₂ (NCA), LiCrMO₄, LiMn₂O₄, and LiFePO₄ (LFP). These positive electrode active materials may be used alone or in combination of two or more kinds. Of these, NCM is preferable as the positive electrode active material from the viewpoint of improving the cycle characteristic of the electricity storage device.

### <Separator>

The separator 50 according to the present embodiment is a porous sheet with insulating properties. However, the shape and dimension of the separator are not particularly limited and can be determined as appropriate according to the battery design. Typically, the separator 50 insulates the positive electrode 30 and the negative electrode 40 from each other, so that the dimension of the separator 50 is larger than that of each of the positive electrode sheet 30 and the negative electrode sheet 40. The material of the separator 50 is not particularly limited, and any known separator used in electricity storage devices may be used as the separator 50. For example, the separator 50 is preferably made of a resin such as polyolefin such as polyethylene or polypropylene, polyester, cellulose, or polyamide. A heat-resistant layer may be provided on a surface of the separator 50, as long as the effects of the technology according to the present disclosure are not significantly impaired. As the heat-resistant layer, for example, a porous layer including an inorganic filler such as ceramic particles is formed.

The thickness (film thickness) of the separator 50 is not particularly limited. Since the separator 50 is porous, the electrolyte solution can permeate toward the width direction of the separator 50 through the interior (porous material) of the separator 50 during pouring. Therefore, the thicker the film thickness of the separator 50, the more the flow path of the electrolyte solution in the electrode assembly 20 is secured. Thus, the electrolyte solution can easily spread inside the electrode assembly 20. The lower limit of the film thickness of the separator 50 may be 5 µm or more, preferably 8 µm or more, more preferably 10 µm or more, and even more preferably 12 µm or more. However, the thicker the film thickness of the separator 50, the lower the energy density of the electricity storage device. Thus, from the viewpoint of improving the capacity density of the electricity storage device, the upper limit of the film thickness of the separator 50 is preferably 40 µm or less, more preferably 30 µm or less, and even more preferably 20 µm or less.

Avoid ratio of the separator 50 is not particularly limited, as long as the effects of the technology according to the present disclosure are not significantly impaired. The higher the void ratio of the separator 50, the easier the electrolyte solution permeates the separator 50. Therefore, the lower limit of the void ratio of the separator 50 is preferably 20% or more, more preferably 30% or more, and even more preferably 40% or more. From the viewpoint of foreign matter short-circuit resistance, the upper limit value of the void ratio of the separator 50 is preferably 80% or less, more preferably 70% or less, and even more preferably 60% or less.

The surface of the negative electrode active material layer 42 disclosed here adheres to the separator 50. The adhesion of the negative electrode active material layer 42 and the separator 50 suitably forms the permeation path B in which the electrolyte solution permeates toward the thickness direction of the negative electrode active material layer through the separator 50. Whether the surface of the negative electrode active material layer 42 and the separator 50 adhere to each other can be confirmed by measuring the peel strength between the negative electrode 40 and the separator 50. The peel strength between the negative electrode 40 and the separator 50 can typically be measured by a 90° peel test in accordance with JIS K 6854-1 : 1999 (ISO 8510-1 : 1990). Specifically, the following procedure can be used for measurement. First, the negative electrode and the separator are taken out from the electricity storage device. Next, the measurement is performed by fixing the negative electrode side and pulling the separator in a 90° direction. When at least 50% of an area where the negative electrode active material layer and the separator are in contact is 0. 1 N/m or more, the negative electrode active material layer and the separator are considered to adhere to each other. Even when the negative electrode active material layer is peeled off without peeling at an interface between the separator and the negative electrode, if the peel strength at this time is 0.1 N/m or more, the peel strength between the separator and the negative electrode is considered to be 0.1 N/m or more (the separator and the negative electrode active material layer adhere to each other).

As described above, the separator 50 adheres to the surface of the negative electrode active material layer 42. If the peel strength between the separator 50 and the negative electrode active material layer 42 increases, the electrolyte solution can easily permeate into the negative electrode active material layer 42 through the path (permeation path B), in which the electrolyte solution permeates toward the thickness direction of the negative electrode active material layer 42 through the separator 50. From the viewpoint of reducing the heat generated amount ratio of the negative electrode, the lower limit of the peel strength is preferably 0.5 N/m or more, more preferably 0.75 N/m or more, and even more preferably 1.0 N/m or more.

The peel strength can be enhanced, for example, by increasing an amount of the binder contained in the negative electrode active material layer 42. The surface of the negative electrode active material layer 42 and the separator 50 may cause an anchor effect, allowing the negative electrode active material layer 42 and the separator 50 to adhere (be press-fitted) to each other. For example, the peel strength can be enhanced by increasing a pressing pressure when the electrode assembly 20 is press-formed in the manufacturing process of the lithium-ion battery 1. The pressing pressure can be set at, for example, about 0.5 MPa to 50 MPa. Such pressing may be heat pressing. Heat pressing facilitates welding between the separator 50 and the surface of the negative electrode active material layer 42.

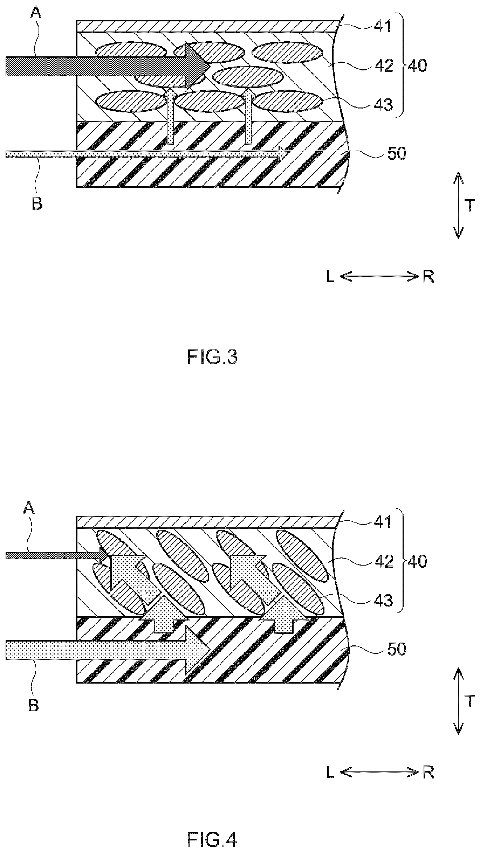

The electricity storage device including the electrolyte solution and the negative electrode 40 as described above can reduce the unevenness in the film formed on the surface of the negative electrode active material layer 42. In general, when the electrolyte solution is poured into the electricity storage device, the electrolyte solution penetrates from a stacked surface of the electrode assembly and gradually progresses toward the center of the electrode assembly. It is thought that there are two permeation paths for the electrolyte solution: the permeation path A, in which the electrolyte solution passes directly through the interior of the negative electrode active material layer 42 and permeates in the width direction of the electrode assembly 20 (in other words, in the direction parallel to the negative electrode current collector foil 41); and the permeation path B, in which the electrolyte solution passes through the interior of the separator 50 and then penetrates toward the thickness direction of the negative electrode active material layer 42 (in other words, in the direction perpendicular to the negative electrode current collector foil 41). FIG. 3 shows the state in which the electrolyte solution permeates under normal conditions (i.e., when the negative electrode active material layer 42 is not subjected to the orientation process and does not adhere to the separator 50). An arrow A in FIG. 3 shows the permeation path A that passes directly through the negative electrode active material layer 42. An arrow B shows the permeation path B that passes through the thickness direction of the negative electrode active material layer 42 via the separator 50. The thickness of the arrow indicates the degree of permeation of the electrolyte solution. The thicker the arrow, the more the permeation in that direction is promoted. As shown in FIG. 3, in the electricity storage device in which no graphite particles 43 are oriented, the electrolyte solution permeates into the interior of the electrode assembly 20 mainly through the permeation path A. However, in the permeation path A, the electrolyte solution passes directly through the negative electrode active material layer 42, allowing the film-forming agent to easily react with metal ions (e.g., sodium ions) mixed in the negative electrode active material layer 42. Thus, the film-forming agent is trapped in the metal ions before the electrolytic solution has spread to the center area of the electrode assembly 20. This results in more films near the laminated surface 21 of the electrode assembly 20. In contrast, at the center of the electrode assembly 20, there is less film, resulting in deviation (unevenness) of the film. In contrast, in the electricity storage device of the present disclosure, the graphite particles 43 contained in the negative electrode active material layer 42 are oriented, so that less electrolyte solution passes through the permeation path A. In addition, by causing the separator 50 to adhere to the surface of the negative electrode active material layer 42, the amount of the electrolyte solution passing through the permeation path B is increased.

Specifically, in the electricity storage device of the present disclosure, the surface of the negative electrode active material layer 42 and the separator 50 adhere to each other. Thus, the electrolyte solution passes through the separator 50 and permeates from there toward the thickness direction of the negative electrode active material layer 42. In the electricity storage device of the present disclosure, the degree of orientation of the graphite particles 43 contained in the negative electrode active material layer 42 is 180 or less. This configuration can promote the permeation of the electrolyte solution toward the thickness direction of the negative electrode active material layer 42 while restricting the permeation of the electrolyte solution from the laminated surface 21 of the electrode assembly 20 directly through the negative electrode active material layer 42. As a result, the boron-containing film-forming agent is less likely to be trapped in the metal ions in the negative electrode active material layer 42, which can reduce unevenness in the film. FIG. 4 schematically illustrates a state in which the electrolyte solution permeates in the electricity storage device of the present embodiment. As shown in FIG. 4, the graphite particles 43 are oriented. The surface of the negative electrode active material layer 42 and the separator 50 adhere to each other, allowing the electrolyte solution to permeate from the separator 50 toward the thickness direction of the negative electrode active material layer 42. This electricity storage device is suitably provided with the film, improving the cycle capacity maintenance rate and reducing the heat generated amount ratio in the negative electrode.

An adhesive layer may be provided between the negative electrode active material layer 42 and the separator 50. The adhesive layer may be formed on the surface of the separator 50. The adhesive layer is a porous sheet with insulating properties. The adhesive layer contains an adhesive binder. The adhesive binder used here is a binder that can be added to the negative electrode active material layer as described above. The adhesive layer may further contain other materials (e.g., ceramic particles or the like). The adhesive layer can also serve as a heat-resistant layer. The adhesive layer can cause the surface of the negative electrode active material layer 42 to adhere (crimp) to the surface of the separator 50, for example, by melting and being pressed and deformed when the electrode assembly 20 is subjected to press-forming.

The adhesive layer between the negative electrode active material layer 42 and the separator 50 can improve the peel strength. The adhesive layer can also bright the surface of the negative electrode active material layer 42 and the separator 50 into intimate contact with each other (to shorten the distance therebetween). The thickness of the adhesive layer is not particularly limited. From the viewpoint of improving peel strength between the negative electrode active material layer 42 and the separator 50, the lower limit of the thickness of the adhesive layer is preferably 0.3 µm or more, more preferably 0.4 µm or more, and even more preferably 0.5 µm or more. The upper limit of the thickness of the adhesive layer may be 5.0 µm or less, 4.0 µm or less, or 3.0 µm or less.

Although the preferred embodiments of the present disclosure have been described above with reference to the drawings, the above description is not intended to be limiting, and various modifications can be obviously made to these embodiments.

### [Examples]

Examples and Comparative Examples are provided below to specifically describe the electricity storage device of the present disclosure. However, these examples are not intended to limit the present disclosure.

### <Example 1: Fabrication of Positive Electrode Sheet>

A paste for forming a positive electrode active material layer was prepared by mixing 98 wt% of NCM powder as a positive electrode active material, 1 wt% of PVDF as a binder, and 1 wt% of acetylene black as a conductivity aid, and then adding a solvent to the mixture. Note that N-methyl-2-pyrrolidone (NMP) was used as the solvent. Next, an aluminum foil of 13 µm in thickness was prepared. The paste for forming the positive electrode active material layer was applied to both sides of the aluminum foil. At this time, the application was adjusted such that the total thickness of the aluminum foil and the positive electrode active material layers on both sides of the aluminum foil (i.e., the average thickness of the positive electrode) was 140 µm. Comma Coater (registered trademark) was used for the application. After application of the paste to form the positive electrode active material layers, these layers with the aluminum foil were dried naturally and then heat-dried at 120°C. Then, they were cut into a piece of 5 cm (length) × 5 cm (width) with a conductive part left thereon to fabricate a positive electrode sheet.

### <Example 1: Fabrication of Negative Electrode Sheet>

A paste for forming a negative electrode active material layer was prepared by mixing 98 wt% of graphite particles as a negative electrode active material, 1 wt% of SBR as the binder, and 1 wt% of CMC as a thickener, and adding a solvent to the mixture. Note that an ion-exchanged water was used as the solvent. Next, a copper foil of 8 µm in thickness was prepared. The paste for forming the negative electrode active material layer was applied to both sides of the copper foil. At this time, the application was adjusted such that the total thickness of the copper foil and the negative electrode active material layers on both sides of the copper foil (i.e., the average thickness of the negative electrode) was 160 µm. Before the applied paste for forming the negative electrode active material layer is solidified, a magnetic field was applied with magnetic field lines facing in the normal direction of the copper foil. The conditions for the application were a maximum magnetic flux density of 350 mT and an application time of 5 seconds. Then, after drying naturally, the paste was heat-dried at 120°C. Then, these layers with the copper foil were cut into a piece of 5.4 cm (length) × 5.4 cm (width) with a conductive part left thereon to fabricate a negative electrode sheet.

### <Fabrication of Laminated Two-Electrode Cell>

For the following measurements of the cycle capacity maintenance rate, the peel strength, the degree of orientation of graphite particles, and the heat generated amount ratio of the negative electrode as described below, a laminated two-electrode cell composed of the positive electrode sheet, the negative electrode sheet, the separator, and an nonaqueous electrolyte solution was used. One porous polyolefin sheet of 6 cm (length) × 6 cm (width), 16 µm (thickness), and made of polyethylene was prepared as the separator. The positive electrode sheet, the separator, and the negative electrode sheet were stacked in this order and adhered together by press compression. The pressing here was performed at a pressure of 10 MPa for 3 seconds. They were then sealed in an aluminum/PP laminate film pouch so that each conductive part was exposed, thereby fabricating a laminated two-electrode cell. Note that the nonaqueous electrolyte solution used was a mixture of LiBOB dissolved in an organic mixed solvent (EC: EMC: DMC = 1:1:1) at a concentration of about 0.5 wt% as the boron-containing film-forming agent. The laminated two-electrode cells used in respective tests were prepared individually.

### <Measurement of Peel Strength Between Negative Electrode Active Material Layer and Separator>

The laminated two-electrode cell was charged at a constant current of 0.1C up to 3.7 V, and then subjected to a soaking treatment in a thermostatic oven at 60°C for 10 hours. The cell was completed by repeatedly charging and discharging between 4.2 V and 3.0 V twice at a constant current of 0.1 C. Next, the completed laminated two-electrode cell was disassembled. The negative electrode and the separator were removed without peeling them off, while collecting the electrolyte solution. A removed laminate body composed of the negative electrode and the separator was cut into a piece of 20 mm (length) × 54 mm (width), which was then set in a tensile testing machine. The negative electrode side was fixed, and the end portion of the separator was clamped. Load data about the laminate body was measured when the separator was pulled 35 mm in the 90° direction.

### <Measurement of Degree of Orientation of Graphite Particles>

The laminated two-electrode cell was charged at a constant current of 0.1 C up to 3.7 V and subjected to the soaking treatment in a thermostatic oven at 60°C for 10 hours. The cell was completed by repeatedly charging and discharging between 4.2 V and 3.0 V twice at a constant current of 0.1 C. Next, the completed laminated two-electrode cell was disassembled. The fabricated laminated bipolar cell was disassembled. The negative electrode sheet was removed while collecting the electrolyte solution. The degree of orientation of the negative electrode active material layer on the removed negative electrode sheet was measured by the X-ray diffraction (XRD). Specifically, the negative electrode sheet was exposed with X rays, and a peak area ratio between (110) and (002) was determined. The XRD conditions were as follows: CuKα radiation was used as the X-ray source, and measurements were made over a measurement range of 5° to 90° with a step width of 0.02°.

### <Measurement of Cycle Capacity Maintenance Rate>

The laminated two-electrode cell was charged at a constant current of 0.1 C up to 3.7 V and subjected to the soaking treatment in a thermostatic oven at 60°C for 10 hours. The cell was completed by repeatedly charging and discharging between 4.2 V and 3.0 V twice at a constant current of 0.1 C. A discharge capacity obtained in the second charging-discharging was defined as an initial discharge capacity. Next, the cell was charged to 4.2 V at a constant current of 1 C and then discharged to 3.3 V at a constant current of 1 C. Charging at 1C and discharging at 1C, defined as one cycle, were repeated for 500 cycles. Then, the cell was charged and discharged once between 4.2 V and 3.0 V at a constant current of 0.1 C, and the resulting discharge capacity was defined as a post-cycle discharge capacity. The cycle capacity maintenance rate (%) was calculated by dividing the post-cycle discharge capacity by the initial discharge capacity and expressing the result in units of percentage.

### <Measurement of Heat Generated Amount of Negative Electrode>

The laminated two-electrode cell was charged at a constant current of 0.1 C up to 4.2 V The cell was then charged at a constant voltage for 1.5 hours to achieve a State Of Charge (SOC) of 100%. Next, the laminated bipolar cell after the charging was disassembled in a glove box (Ar atmosphere). The negative electrode was removed while collecting the electrolyte solution, and 15 mm² of the negative electrode active material was taken out from a center region of the negative electrode active material layer. The negative electrode active material taken was then placed in a sample container. The tightly closed sample container was set in a differential scanning calorimetry (DSC) device to measure a heat generated amount. The conditions for measuring the heat generated amount were as follows: the temperature was increased from 25°C to 250°C at 2°C/minute under an Ar atmosphere. The heat generated amount from 100°C to 200°C was determined by integration.

### <Examples 2 and 3 and Comparative Examples 1 to 5>

The same procedure as in Example 1 was performed, except that the peel strength and the degree of orientation were changed as shown in Table 1. The peel strength was adjusted by reducing the pressing pressure. The degree of orientation was adjusted by shortening the application time. The results of the respective tests are shown in Table 1. The heat generated amount ratio of the negative electrode is shown as a ratio to that of Comparative Example 1.

### [Table 1]

**Table 1**

| | LiBOB | Peel strength [N/m] | Degree of orientation | Cycle capacity maintenance rate [%] | Heat generated amount ratio of negative electrode |
|---|---|---|---|---|---|
| Example 1 | Presence | 1.0 | 150 | 91 | 0.7 |
| Example 2 | Presence | 1.0 | 180 | 90 | 0.8 |
| Example 3 | Presence | 0.5 | 180 | 90 | 0.9 |
| Comparative Example 1 | Presence | 1.0 | 550 | 88 | 1.0(reference) |
| Comparative Example 2 | Presence | 0 | 550 | 88 | 1.2 |
| Comparative Example 3 | Absence | 0 | 550 | 86 | 2.5 |
| Comparative Example 4 | Presence | 0 | 180 | 90 | 1.2 |
| Comparative Example 5 | Presence | 1.0 | 200 | 89 | 1.0 |

As can be seen from the test results described above, the cycle capacity maintenance rate was improved in Examples 1 to 3 where the degree of orientation was low, compared to Comparative Examples 1 to 3 where the degree of orientation was high. Furthermore, the heat generated amount ratio of the negative electrode was also reduced in Examples 1 to 3 where the degree of orientation was low. In Comparative Example 3 where the electrolyte solution did not contain a film-forming agent (LiBOB), the cycle capacity maintenance rate was low, and the heat generated amount ratio of the negative electrode was significantly high. In Comparative Example 4 where the degree of orientation was low, the cycle capacity maintenance rate was improved. However, in this Comparison Example 4, the peel strength was 0 N/m (in other words, in a state where the negative electrode active material layer and the separator did not adhere to each other), and the heat generated amount ratio of the negative electrode was greater than that in Comparative Example 1. In contrast, in Comparative Example 5, the heat generated amount ratio was improved by increasing the peel strength between the negative electrode active material layer and the separator. However, in Comparative Example 5, the cycle capacity maintenance rate was not sufficiently improved because the degree of orientation was as high as 200.

Above, specific examples of the herein disclosed technique have been described in detail, but these are merely illustrations, and are not intended to restrict the scope of claims. The technique recited in claims contains matters in which the above-illustrated specific examples are variously deformed or changed.

In the technology disclosed herein, each component or each process referred to herein may be omitted or combined as appropriate, to the extent that no particular problems arise. This description also includes the disclosures set forth in the following respective items.

Item 1: an electricity storage device, comprising: an electrode assembly 20 including a positive electrode 30 having a positive electrode active material layer 32, a negative electrode 40 having a negative electrode active material layer 42, and a separator 50 interposed between the positive electrode 30 and the negative electrode 40; and an electrolyte solution, characterized in that the electrolyte solution contains a boron-containing film-forming agent, the negative electrode active material layer 42 adheres to the separator 50, the negative electrode active material layer 42 contains graphite particles 43, and the graphite particles 43 contained in the negative electrode active material layer 42 have a degree of orientation of 180 or less.

Item 2: the electricity storage device according to item 1, wherein a peel strength between the negative electrode active material layer 42 and the separator 50 is 0.5 N/m or more.

Item 3: the electricity storage device according to item 1 or 2, wherein an adhesive layer is provided between the negative electrode active material layer 42 and the separator 50.

Item 4: the electricity storage device according to any one of items 1 to 3, wherein an average aspect ratio of the graphite particles 43 is 1.2 or more.

Item 5: the electricity storage device according to any one of items 1 to 4, wherein the boron-containing film-forming agent is a lithium salt of an oxalate complex.

Item 6: the electricity storage device according to any one of items 1 to 5, wherein the boron-containing film-forming agent is lithium bis(oxalate)borate.

## Claims

1. An electricity storage device, comprising:
an electrode assembly (20) including a positive electrode (30) having a positive electrode active material layer (32), a negative electrode (40) having a negative electrode active material layer (42), and a separator (50) interposed between the positive electrode (30) and the negative electrode (40); and
an electrolyte solution, **characterized in that**
the electrolyte solution contains a boron-containing film-forming agent,
the negative electrode active material layer (42) adheres to the separator (50),
the negative electrode active material layer (42) contains graphite particles (43), and
the graphite particles (43) contained in the negative electrode active material layer (42) have a degree of orientation of 180 or less.

2. The electricity storage device according to claim 1, wherein a peel strength between the negative electrode active material layer (42) and the separator (50) is 0.5 N/m or more.

3. The electricity storage device according to claim 1 or 2, wherein an adhesive layer is provided between the negative electrode active material layer (42) and the separator (50).

4. The electricity storage device according to any one of claims 1 to 3, wherein an average aspect ratio of the graphite particles (43) is 1.2 or more.

5. The electricity storage device according to any one of claims 1 to 4, wherein the boron-containing film-forming agent is a lithium salt of an oxalate complex.

6. The electricity storage device according to any one of claims 1 to 5, wherein the boron-containing film-forming agent is lithium bis(oxalate)borate.
